## Europäisches Patentamt
## European Patent Office
## Office européen des brevets

(19)

(11) Veröffentlichungsnummer: **0 053 349**
**B1**

(12)

# EUROPÄISCHE PATENTSCHRIFT

(45) Veröffentlichungstag der Patentschrift:
27.06.84

(21) Anmeldenummer: 81109879.7

(22) Anmeldetag: 25.11.81

(51) Int. Cl.³: **G 01 N 21/74, G 01 N 1/00**

(54) Verfahren und Vorrichtung zum Einbringen einer Probe in ein Graphitrohr bei der flammenlosen Atomabsorptions-Spektroskopie.

(30) Priorität: 27.11.80 DE 3044627

(43) Veröffentlichungstag der Anmeldung:
09.06.82 Patentblatt 82/23

(45) Bekanntmachung des Hinweises auf die Patenterteilung:
27.06.84 Patentblatt 84/26

(84) Benannte Vertragsstaaten:
DE GB IT

(56) Entgegenhaltungen:
DE - A - 2 023 336
DE - A - 2 710 861
DE - A - 2 945 646
GB - A - 2 071 845
US - A - 4 008 963
US - A - 4 049 134
US - A - 4 176 956

ANALYTICAL CHEMISTRY, Band 51, No. 14, Dezember 1979 WASHINGTON, D.C. (US) D. MANNING u.a.:
"Sampling at constant temperature in Graphite furnace atomic absorption spectrometry", Seiten 2375-2378

(73) Patentinhaber: Bodenseewerk Perkin-Elmer & Co. GmbH, Alte Nussdorfer Strasse 15 Postfach 1120, D-7770 Überlingen/Bodensee (DE)

(72) Erfinder: Huber, Bernhard, Hildegardring 42, D-7770 Überlingen (DE)
Erfinder: Tomoff, Toma, Dipl.-Ing., Lavendelweg 9, D-7770 Überlingen (DE)
Erfinder: Tamm, Rolf Günther Arnold, Ing. grad., Am Fohrenbühl 8, D-7777 Salem 2 (DE)
Erfinder: Gönner, Winfried, Ing. grad., Magnolienweg 6, D-7770 Überlingen (DE)

(74) Vertreter: Weisse, Jürgen, Dipl.-Phys. et al, Patentanwälte Dipl.-Phys. Jürgen Weisse Dipl.-Chem. Dr. Rudolf Wolgast Bökenbusch 41 Postfach 11 03 86, D-5620 Velbert 11 Langenberg (DE)

**Beschreibung**

Die Erfindung betrifft ein Verfahren für die flammenlose Atomabsorptions-Spektroskopie zum Einbringen einer Probe in ein Graphitrohr, das mit seinen Enden zwischen Kontaktstücken gehalten ist, die je einen fluchtenden Durchbruch für den Durchtritt eines Meßlichtbündels aufweisen, bei welchem

(a) die Probe auf einen Probenträger aufgebracht wird,

(b) der Probenträger in eine erste Stellung außerhalb des Graphitrohrs bewegt und die Probe dort zur Veraschung erhitzt wird und

(c) der Probenträger in eine zweite Stellung innerhalb des Graphitrohrs bewegt und die Probe dort zur Atomisierung erhitzt wird, wobei die Probe auf dem Probenträger verbleibt.

Bei einer Graphitrohrküvette ist ein Graphitrohr zwischen zwei ringförmigen Kontaktstücken gehalten. Über die Kontaktstücke, die gewöhnlich als kühlmitteldurchflossene Kühlkammern ausgebildet sind, kann ein elektrischer Strom durch das Graphitrohr geleitet und dieses dadurch auf hohe Temperaturen aufgeheizt werden. Bei bekannten Graphitrohren ist in der Mantelfläche eine seitliche Probeneingabeöffnung vorgesehen, durch welche eine meist flüssige Probe in das Graphitrohr eingebracht werden kann. Das Graphitrohr wird dann in mehreren Stufen aufgeheizt, um die eingebrachte Probe zu trocknen, zu veraschen und schließlich zu atomisieren, so daß sich innerhalb des Graphitrohres eine »Atomwolke« bildet, in welcher die verschiedenen Bestandteile der Probe in atomarer Form vorliegen. Das Meßlichtbündel eines Atomabsorptions-Spektralphotometer verläuft in Längsrichtung durch die Durchbrüche der ringförmigen Kontaktstücke und durch die Längsbohrung des Graphitrohres. Dieses Meßlichtbündel wird von Strahlung gebildet, die beispielsweise mittels einer Hohlkathodenlampe erzeugt wird und nur die Resonanzlinien eines gesuchten Elements enthält. Im Idealfall wird das Meßlichtbündel daher nur von den Atomen dieses gesuchten Elements in der Atomwolke absorbiert, so daß die Schwächung des Meßlichtbündels ein Maß für die Menge des gesuchten Elements in der Probe darstellt.

Üblicherweise liegt eine Probe in flüssiger Form als Lösung vor. Um eine Beeinflussung der Messung durch das Lösungsmittel zu vermeiden und eine schnelle Atomisierung der Probe für die Messung zu gewährleisten, erfolgt vor der Messung bei niedrigerer Temperatur die Trocknung der Probe, wobei das Lösungsmittel verdampft wird. Daran schließt sich die »Veraschung« an, bei welcher die Probe bei höherer Temperatur thermisch zersetzt wird. Dabei kann auch Ruß auftreten, der von nicht-verdampften Bestandteilen der Probe gebildet wird und durch nichtspezifische Absorption des Meßlichtbündels die Messung verfälscht. Diese störenden Bestandteile werden vor der eigentlichen Messung durch einen Schutzgasstrom weggeführt, der ständig durch das Graphitrohr fließt und den Zutritt von Luft und damit ein Verbrennen des Graphitrohrs verhindert.

Bei bekannten »Graphitrohrküvetten« dieser Art wird die Probe in das Graphitrohr eingespritzt, so daß sie sich etwa in der Mitte des Graphitrohrs auf dem unteren Teil der Innenwandung sammelt. Die Temperatur des Graphitrohrs wird nach einem vorgegebenen Programm zum Trocknen, Veraschen und Atomisieren verändert.

Dabei erfolgt Trocknung und Veraschung innerhalb des Graphitrohres, das ein gerade durchgehendes Rohr ist, im Strahlengang des Meßlichtbündels ist. Dadurch entsteht ein Signal an dem vom Meßlichtbündel beaufschlagten Detektor. Störende Bestandteile aus dem Trocknungs- und Veraschungsvorgang, die von dem Schutzgasstrom nicht vollständig aus dem Graphitrohr ausgeblasen werden, können sich an der Innenwandung des Graphitrohres niederschlagen und die anschließende Messung verfälschen.

In manchen Fällen hängt die Atomisierungstemperatur, bei welcher ein gesuchtes Element in der Probe atomisiert wird, von der Art der Verbindung ab, in welcher das Element in der getrockneten und veraschten Probe vorkommt. Wenn dann das Graphitrohr nach dem Veraschen stetig aufgeheizt wird, dann kann es vorkommen, daß ein gesuchtes Element erst aus der einen Verbindung und anschließend bei höherer Temperatur aus einer anderen Verbindung atomisiert wird. Das führt zu entsprechenden Signalen am Detektor, so daß die Eindeutigkeit des Zusammenhangs zwischen Peakhöhe des Detektorsignals und Menge des gesuchten Elements gestört ist.

Es ist aus diesem Grund bekannt, die Probenlösung als Tropfen auf einen Probenträger, z. B. eine Drahtspirale aus Wolframdraht, aufzubringen. Der Probenträger mit der Probenlösung wird vor die seitliche Einführöffnung des Graphitrohrs bewegt. Durch das Graphitrohr wird ein Schutzgasstrom von den Enden her hindurchgeleitet. Dieser Schutzgasstrom tritt aus der Einführöffnung aus. Wenn das Graphitrohr aufgeheizt ist, ist auch der austretende Schutzgasstrom heiß. Durch diesen heißen Schutzgasstrom wird die Probe getrocknet. Das verdampfende Lösungsmittel kommt dabei gar nicht in das Graphitrohr hinein (Analytical Chemistry Bd. 51 (1979), 2375−2378).

Bei weiterer Annäherung des Probenträgers an das Graphitrohr wird die Temperatur des Probenträgers durch den Wärmeübergang von dem Graphitrohr weiter erhöht, so daß auch die getrocknete Probe aufgeheizt und thermisch zersetzt wird. Auch das geschieht außerhalb des Graphitrohres. Anschließend wird das Graphitrohr auf die Atomisierungstemperatur aufgeheizt. Nach Erreichen dieser Temperatur wird der Probenträger schnell in das Graphitrohr eingeführt.

Auf diese Weise wird das Niederschlagen störender Bestandteile aus dem Trocknungs- und Veraschungsvorgang auf der Innenwandung des Graphitrohrs verhindert.

Die getrocknete und zersetzte Probe wird durch das Einführen des Probenträgers mit einem Mal auf die maximale Atomisierungstemperatur gebracht, so daß die Atome des gesuchten Elements unabhängig von ihrer chemischen Verbindung gleichzeitig in die Atomwolke gelangen.

Durch die DE-A-3 008 938 ist ein Graphitrohr für die flammenlose Atomabsorptions-Spektroskopie mit einem rohrförmigen Graphitkörper bekannt, der eine seitliche Einführöffnung zum Einführen einer Probe aufweist und an dem ein ebenfalls rohrförmiger seitlicher Ansatz vorgesehen ist, welcher die Einführöffnung umgibt. Ein Tropfen von flüssiger Probenlösung wird auf einen Träger in Form von einer Drahtspirale aufgebracht. Der Träger wird vor die Einführöffnung des Graphitrohres bewegt, so daß bei aufgeheiztem Graphitrohr die Probe durch den austretenden Strom von heißem Schutzgas getrocknet wird. Anschließend wird der Träger zur thermischen Zersetzung in den rohrförmigen seitlichen Ansatz des Graphitrohrs eingeführt und das Graphitrohr dann auf die Veraschungstemperatur aufgeheizt.

Durch die DE-A-3 009 794 ist eine Vorrichtung zur Probeneingabe in ein Graphitrohr bei der flammenlosen Atomabsorptions-Spektroskopie mit einem in das Graphitrohr einführbaren Probenträger aus elektrisch leitendem Material bekannt, bei welcher der Probenträger mit elektrischen Anschlüssen versehen und durch Hindurchleiten von elektrischem Strom außerhalb des Graphitrohres kontrolliert beheizbar ist, so daß die Trocknung und thermische Zersetzung der Probe außerhalb des Graphitrohres durch Beheizen des Probenträgers erfolgt. Dabei wird der Probenträger für die Atomisierung in eine seitliche Öffnung des Graphitrohrs hineinbewegt.

Durch die DE-A-2 710 861 ist eine Vorrichtung zur Probeneingabe in ein Graphitrohr bei der flammenlosen Atomabsorptions-Spektroskopie bekannt, bei welcher eine flüssige Probe auf den Probenträger aufgebracht und vor dem Einführen des Probenträgers in das Graphitrohr durch Erwärmen getrocknet und dann thermisch zersetzt wird. Die bekannte Vorrichtung enthält einen Probenträger in Form eines geraden Drahts aus elektrisch leitendem Material, auf den in Abständen voneinander wendelförmige Teile aufgefädelt sind. Auf diese wendelförmigen Teile wird flüssige Probe aufgebracht. Der Probenträger ist in das Graphitrohr einführbar, indem der gerade Draht durch fluchtende seitliche Öffnungen des Graphitrohrs hindurchgeführt ist, das Graphitrohr also quer durchsetzt. Der Draht ist mit elektrischen Anschlüssen versehen und dadurch aufheizbar. Ein Paar von nebeneinander verlaufenden Schenkeln ist mit dem Probenträger verbunden und hält diesen. Die Schenkel sitzen an einem Schlitten, der quer zur Längsachse des Graphitrohrs beweglich ist. Diese Schenkel erstrecken sich quer zur Bewegungsrichtung des Schlittens zu beiden Seiten des Graphitrohrs und halten den geraden Draht, der zwischen den Schenkeln quer durch das Graphitrohr geführt ist. Bei schrittweiser Fortschaltung des Schlittens wird so der Draht schrittweise durch das Graphitrohr hindurchgezogen. Dabei gelangen nacheinander die verschiedenen wendelförmigen Teile mit den darauf aufgebrachten Proben in das Graphitrohr. Durch Hindurchleiten von elektrischem Strom durch den geraden Draht über die Anschlüsse werden die Probenflüssigkeiten schon außerhalb des Graphitrohrs getrocknet, das heißt wird das Lösungsmittel verdampft, und verascht. Es soll hierdurch die Möglichkeit geschaffen werden, eine Mehrzahl von Proben schnell nacheinander zu analysieren.

Die bekannte Anordnung ist auf die Analyse einer Mehrzahl von Proben schnell nacheinander abgestellt. Sie bringt verschiedene Probleme mit sich.

Die Graphitrohrküvette muß zwei gegenüberliegende, fluchtende Querbohrungen aufweisen, durch welche der Draht hindurchgeführt ist.

Es müssen dabei auch gegenüberliegende Seiten der Graphitrohrküvette zwei relativ große Durchbrüche vorgesehen sein. Das beschleunigt das Auseinanderlaufen der im Inneren der Graphitrohrküvette gebildeten »Atomwolke«.

Eine Graphitrohrküvette ist ein Verbrauchsteil, der nach einer gewissen Anzahl von Analysen ersetzt wird. Da der Draht durch die Graphitrohrküvette hindurchgeführt ist, muß bei jedem Wechsel der Graphitrohrküvette der Draht von den Schenkeln und den elektrischen Anschlüssen gelöst und nach Entfernen der alten Graphitrohrküvette durch die neue Graphitrohrküvette hindurchgefädelt werden. Das ist eine umständliche und zeitraubende Prozedur, die außerdem zu einem schnellen Verschleiß der Vorrichtung führt.

Durch die DE-A-2 219 190 ist eine Anordnung zum Atomisieren einer Probe für die flammenlose Atomabsorptions-Spektroskopie bekannt, bei welcher die Probe in einen kleinen Tiegel aus elektrisch leitendem Material eingebracht wird. Dieser Tiegel ist durch zwei dicht nebeneinander aber im Abstand voneinander verlaufende Schenkel gehalten. Er wird bis auf Atomisierungstemperatur beheizt, indem über die Schenkel elektrischer Strom durch den Tiegel hindurchgeleitet wird. Der Tiegel ist von einem beheizten, rohrförmigen Fangkörper umgeben. Dieser hat, im Gegensatz zu üblichen Graphitrohren, nur die Funktion, die durch die Atomisierung der Probe gebildete Atomwolke zusammenzuhalten. Die Beheizung des Fangkörpers soll nicht die Probe atomisieren sondern nur ein Niederschlagen der Probenatome auf dem Fangkörper verhindern. Es wird in der DE-A-2 219 190 auch vorgeschlagen, den Tiegel zur Durchführung eines Trocknungs- und Veraschungsprozesses aus dem von dem Fangkörper gebildeten Hohlraum herauszubewegen.

Es handelt sich dabei um ein besonderes Verfahren zur flammenlosen Atomabsorptions-Spektroskopie, das nicht mit üblichen Graphitrohren arbeitet. Wie das Einbringen der Probe und die Bewegung der Teile zueinander konstruktiv bewerkstelligt werden soll, ist in der genannten Druckschrift nicht angegeben.

Die beschriebenen Vorrichtungen sind zum Einbringen flüssiger Proben in das Graphitrohr vorgesehen.

Durch die DE-A-2 945 646 (veröffentlicht am 27. 5. 1981) ist ein Verfahren zum Aufgeben von festen oder halbfesten Proben in einer Graphitrohrküvette für die flammenlose Atomabsorptions-Spektroskopie vorgeschlagen, bei welchem die Probe mittels eines Werkzeugs aufgenommen wird, dessen seitliche Abmessungen ein Einführen des Werkzeugs in die in der Mantelfläche des Graphitrohrs üblicherweise vorgesehene Dosieröffnung gestatten. Das Werkzeug wird mit der Probe durch diese Dosieröffnung hindurch in das Graphitrohr eingeführt. Das Werkzeug kann dabei eine Art Löffel enthalten, der um 180° verdrehbar ist, um eine eingebrachte feste Probe innerhalb des Graphitrohrs auszukippen.

Durch die DE-B-2 023 336 ist weiterhin bekannt, eine Graphitrohrküvette mit Gehäuse, Kontaktstücken und Graphitrohr gegenüber dem Meßlichtbündel seitlich wegzuklappen, so daß das Graphitrohr durch ein Kontaktstück hindurch von einem Ende her zugänglich ist. Es kann dann mittels eines geeigneten Werkzeugs feste Probe von der Stirnseite des Graphitrohres her in das Graphitrohr eingebracht werden.

Durch die US-A-4 049 134 ist eine Einrichtung zum Fördern einer Probe aus einem Vorratsbehälter in eine abgedichtete Kammer, z. B. eine Verbrennungskammer eines Geräts zur Verbrennungsanalyse, bekannt. Diese Einrichtung enthält ein langgestrecktes Schaufelglied, das in einem zu der Kammer führenden Kanal beweglich ist. Das Schaufelglied wird über ein flexibles Band angetrieben, das mit einem Ende an dem Schaufelglied angebracht ist. Dieses Band ist zwischen zwei Rollen geführt, die federnd gegeneinandergedrückt werden und von denen eine antreibbar ist. Das andere Ende des Bandes ist aus einem Bandgehäuse abziehbar oder in dieses zurückschiebbar. In einer Stellung des Schaufelglieds wird dieses mit Material aus dem Vorratsbehälter beladen. Dann wird das Schaufelglied in die Verbrennungskammer vorbewegt. Nach der Verbrennung wird das Schaufelglied aus der Kammer zurückgezogen. Ein in dem Kanal gelagerter Abstreifer streift die Verbrennungsrückstände in einen Aufnahmehohlraum auf der Unterseite des Kanals. Über einen Anschluß mit Ventil wird ein Spülgas eingeleitet.

Es handelt sich dort nicht um flammenlose Atomabsorptions-Spektroskopie. Dementsprechend ist kein Meßstrahlenbündel vorhanden. Es tritt auch nicht das Problem der Veraschung auf, und der Probenträger, nämlich das Schaufelglied, ist nicht außerhalb der Verbrennungskammer erhitzbar.

Der Erfindung liegt die Aufgabe zugrunde, eine Vorrichtung der eingangs definierten Art so auszubilden, daß auch größere Probenmengen und auch feste oder pulverförmige Proben aufgegeben werden können.

Erfindungsgemäß wird diese Aufgabe dadurch gelöst, daß

(d) die Probe auf einen plättchen- oder tiegelförmigen Probenträger aufgebracht wird und

(e) der Probenträger unterhalb des Meßlichtbündels in Axialrichtung von der Stirnseite her in das Graphitrohr in seine zweite Stellung bewegt wird.

Ausgestaltungen des erfindungsgemäßen Verfahrens sind Gegenstand der Unteransprüche 2 bis 4.

Eine Vorrichtung zur Durchführung des Verfahrens ist Gegenstand des Patentanspruchs 5.

Ausgestaltungen der Vorrichtung sind Gegenstand der Unteransprüche 6 bis 20.

Bei dem erfindungsgemäßen Verfahren wird die Probe auf einen plättchen- oder tiegelförmigen Probenträger aufgebracht und zur Atomisierung in Axialrichtung von der Stirnseite her in das Graphitrohr eingebracht. Das gestattet das Einbringen größerer Probenmengen und auch fester Proben. Es wird aber die Veraschung der Probe außerhalb des Graphitrohrs, nämlich vor der Stirnfläche des Probenträgers durchgeführt, so daß die geschilderten, mit der Veraschung der Probe innerhalb des Graphitrohrs verbundenen Probleme entfallen.

Bei den bekannten Verfahren und Vorrichtungen wird entweder die Probe durch die seitliche Dosieröffnung eingebracht, was insbesondere bei festen Proben die Abmessungen und damit die Menge der Probe beschränkt, oder die Probe wird von der Stirnseite her auf einem Löffel oder dergleichen in das Graphitrohr hineingebracht und dort ausgekippt, so daß auch die Veraschung im Graphitrohr selbst erfolgt.

Einige Ausführungsbeispiele der Erfindung sind nachstehend unter Bezugnahme auf die zugehörigen Zeichnungen näher erläutert.

Fig. 1 ist eine schematisch-perspektivische Darstellung einer Ausführungsform einer Graphitrohrküvette und einer Vorrichtung zur Probeneingabe.

Fig. 2 zeigt schematisch einen Längsschnitt durch eine zweite Ausführungsform einer Graphitrohrküvette und einer Vorrichtung zur Probeneingabe.

Fig. 3 ist eine Darstellung ähnlich Fig. 2 und zeigt eine dritte Ausführungsform der Vorrichtung.

Fig. 4 zeigt eine Draufsicht eines vorzugsweise bei der Ausführungsform nach Fig. 2 benutzten Probenträgers.

Fig. 5 zeigt einen zugehörigen Längsschnitt.

Fig. 6 zeigt eine Draufsicht eines vorzugsweise bei der Ausführungsform nach Fig. 3 benutzten Probenträgers.

Fig. 7 zeigt einen Schnitt längs der Linie A-B von Fig. 6.

Fig. 8 zeigt einen Schnitt längs der Linie C-D von Fig. 6.

Fig. 9 zeigt eine Draufsicht einer weiteren Ausführungsform eines Probenträgers.

Fig. 10 zeigt eine zugehörige Seitenansicht.

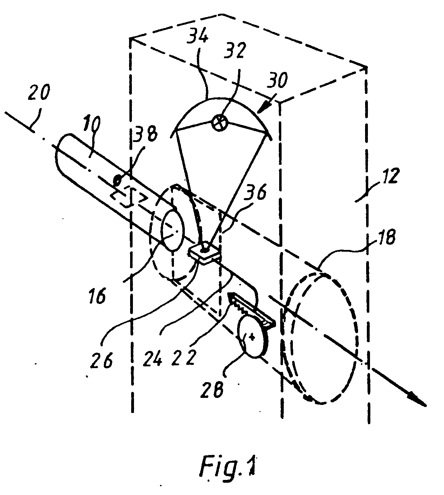

Bei der Ausführungsform nach Fig. 1 ist ein Graphitrohr 10 mit seinen Enden zwischen kühlmitteldurchflossenen Kühlkammern gehalten, von denen in Fig. 1 nur die Kühlkammer 12 gezeigt ist. Die Kühlkammern wirken hier als Kontaktstücke für das Graphitrohr 10. Die Kühlkammern 12 weisen je einen mit der Längsbohrung 16 des Graphitrohrs 10 fluchtenden Durchbruch 18 für den Durchtritt eines Meßlichtbündels 20 auf. Ein Schlitten 22 mit einem Halter 24 und einem Probenträger 26 ist in dem Durchbruch 18 der einen Kühlkammer 12 unterhalb des Strahlengangs des Meßlichtbündels 20 angeordnet und in Längsrichtung des Durchbruchs 18 und des Graphitrohrs 10 beweglich geführt. Der Antriebsmotor ist hier mit 28 bezeichnet. Eine Heizeinrichtung 30, hier in Gestalt einer Lichtquelle 32 und eines Reflektors 34, zum kontaktlosen Beheizen des Probenträgers 26 ist ebenfalls in der Kühlkammer 12 angeordnet. In der Kühlkammer 12 ist im Bereich der Heizeinrichtung 30 ein Dosierfenster 36 vorgesehen, durch welches hindurch der Probenträger 26 zugänglich ist und durch welches Dämpfe beim Trocknen und Zersetzen der Probe austreten können.

Durch den Antriebsmotor 28 ist der Schlitten 22 mit dem Halter 24 und dem Probenträger 26 in Richtung auf die Stirnseite des Graphitrohres und in die Bohrung des Graphitrohres 10 hinein kontrolliert vorbewegbar. In einer ersten ansteuerbaren Stellung des Schlittens 22, die in Fig. 1 dargestellt ist, ist der Probenträger 26 im Bereich der Heizeinrichtung 30, die zum kontaktlosen Beheizen des Probenträgers 26 eingerichtet ist. In einer zweiten ansteuerbaren Stellung des Schlittens 22, die in Fig. 1 gestrichelt dargestellt ist, ragt der Halter 24 mit dem Probenträger 26 in das Innere des Graphitrohrs 10.

Diese Anordnung hat den Vorteil, daß übliche Graphitrohre benutzt werden können. Es ist möglich, das Graphitrohr 10 wahlweise direkt durch eine kleine Einführöffnung 38 in konventioneller Weise zu beschicken oder mittels des beschriebenen Probenträgers 26.

Der Halter 24 kann aus hochschmelzendem Metall, Graphit oder Glaskohle bestehen. Die Probe wird auf den Probenträger 26 aufgebracht. Der Probenträger wird in die erste Stellung außerhalb des Graphitrohrs 10 bewegt und die Probe dort durch die Heizvorrichtung 30 zur Veraschung erhitzt. Anschließend wird der Probenträger in eine zweite Stellung innerhalb des Graphitrohrs 10 bewegt. Dort wird die Probe — im vorliegenden Fall durch Aufheizen des Graphitrohrs 10 — zur Atomisierung erhitzt. Der plättchen- oder tiegelförmige Probenträger wird dabei unterhalb des Meßlichtbündels 20 in Axialrichtung von der Stirnseite her in das Graphitrohr 10 in seine zweite Stellung bewegt.

Auf den Probenträger kann eine Probe in festem Zustand aufgebracht werden.

Die Veraschung der Probe in der ersten Stellung erfolgt durch eine von dem Graphitrohr 10 getrennte Heizeinrichtung 30.

Eine andere Ausführungsform ist in Fig. 2 dargestellt.

In Fig. 2 ist das Graphitrohr 40 zwischen zwei üblicherweise ebenfalls als Kühlkammern ausgebildeten Kontaktstücken 42 und 44 eingespannt. Die Kontaktstücke weisen mit der Bohrung des Graphitrohrs 10 fluchtende Durchbrüche 46 bzw. 48 auf, die auf der Außenseite durch Fenster 50 bzw. 52 abgeschlossen sind. Die Vorrichtung enthält einen Probenträger 54, auf den die Probe aufgedruckt wird und eine Vorrichtung 56 zum Bewegen des Probenträgers 54 in eine erste Stellung auerhalb des Graphitrohrs 40, in welcher eine Veraschung der Probe stattfindet, und in eine zweite Stellung innerhalb des Graphitrohrs 40, in welcher eine Atomisierung der Probe erfolgt. Der Probenträger 54 ist plättchen- oder tiegelförmig ausgebildet, wie unten noch im einzelnen beschrieben wird. Die Vorrichtung 56 zum Bewegen des Probenträgers ist vor einer Stirnfläche des Graphitrohrs 40, nämlich der rechten, außerhalb des Strahlengangs des Meßlichtbündels 58 angeordnet. Der Probenträger 54 ist unterhalb des Meßlichtbündels 58 in Axialrichtung von der Stirnseite her in das Graphitrohr 40 in seine zweite Stellung bewegbar.

Die Vorrichtung 56 zum Bewegen des Probenträgers weist einen in Längsrichtung des Graphitrohrs 40 geradgeführten Schlitten 60 auf, an welchem der Probenträger 54 graphitrohrseitig sich in Längsrichtung des Graphitrohrs 40 erstreckend angebracht ist, und ein Antriebsmotor 62, der mit dem Schlitten z. B. über ein Zahnrad und eine Zahnleiste gekuppelt ist und durch den der Schlitten 60 mit dem Probenträger 54 in Richtung auf die Stirnfläche des Graphitrohrs 40 kontrolliert vorbewegbar ist. Der Schlitten 60 ist ringförmig mit einem Durchbruch 64 für das Meßlichtbündel 58 ausgebildet. Er bildet unterhalb des Meßlichtbündels 58 einen axial vorstehenden Halter 66, an welchem der Probenträger sitzt.

Die Kühlkammer 44 besitzt an ihrem graphitrohrseitigen Ende ein seitliches Dosierfenster 68 zum Einbringen der Probe. Der Schlitten 60 ist durch den Antriebsmotor 62 bei der Ausführungsform nach Fig. 2 in eine Probenaufgabestellung, eine zurückgefahrene Stellung, eine Veraschungsstellung und in eine Atomisierungsstellung verfahrbar. In der Probenaufgabestellung befindet sich der Probenträger 54 unter dem Dosierfenster. In der zurückgefahrenen Stellung befindet sich der Probenträger 54 auf der dem Graphitrohr 40 abgewandten Seite des Dosierfensters 68. In der Veraschungsstellung befindet sich der Probenträger 54 zwischen dem Dosierfenster 68 und der Stirnfläche des Graphitrohrs 40. In der Atomisierungsstellung erstreckt sich der Probenträger 54 in das Graphitrohr hinein. In Fig. 2 ist die Probenaufgabestellung durch die Linie 72, die zurückgefahrene Stellung durch die Linie 74, die Veraschungsstellung durch die Linie 76 und die Atomisierungsstellung durch die Linie 78 angedeutet. In der Darstellung von Fig. 2 befindet sich der Probenträger 54 in der zurückgezogenen Stellung.

Bei der Ausführungsform nach Fig. 2 wird der Probenträger 54 zunächst in die Probenaufgabestellung 72 gebracht. Die Probe wird durch das Dosierfenster 68 aufgegeben. Anschließend wird der Probenträger 54 vorwärts bewegt in die Veraschungsstellung 76. Das Graphitrohr 40 wird aufgeheizt. Dabei strömt das durch das Graphitrohr 60 fließende Schutzgas, das entsprechend erwärmt wird, über die Probe und den Probenträger. Hierdurch erfolgt eine Aufheizung der Probe auf die Veraschungstemperatur, so daß eine thermische Zersetzung stattfindet. Der Rauch, der dabei eventuell gebildet wird, wird von dem Schutzgasstrom durch das Dosierfenster 68 hindurch abgeführt, kann somit nicht in das Graphitrohr 40 gelangen. Ebenso wird verdampfendes Lösungsmittel durch den Gasstrom abgeführt.

Daraufhin wird der Probenträger 54 in die zurückgezogene Stellung zurückgefahren. Es kann jetzt das Graphitrohr voll auf die Atomisierungstemperatur aufgeheizt werden. Wenn diese Atomisierungstemperatur erreicht ist, wird der Probenträger 54 schnell in die Atomisierungsstellung 78 vorbewegt. Es erfolgt dann eine schnelle Aufheizung und Atomisierung der Probe, so daß ein gesuchtes Element auch in verschiedenen Verbindungen etwa gleichzeitig freigesetzt wird und zu dem Meßpeak gleichzeitig beiträgt.

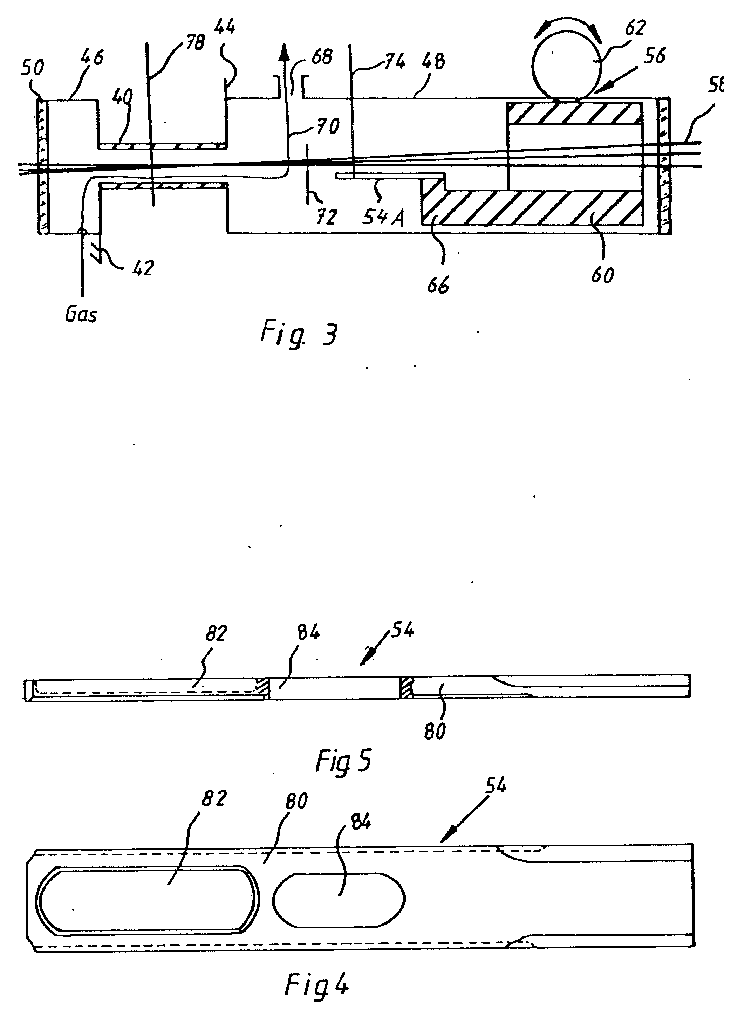

Eine bevorzugte Ausführung des Probenträgers 54 ist in den Fig. 4 und 5 dargestellt. Der Probenträger 54 ist von einem langgestreckten flachen Teil 80 von rechteckiger Grundform gebildet. Der Teil 80 weist an seinem in Fig. 4 und 5 linken Ende eine flache Vertiefung 82 auf. In seinem mittleren Bereich in Längsrichtung gegen die Vertiefung 82 versetzt, weist der Teil 80 einen Durchbruch 84 auf. Der Durchbruch 84 verringert die Wärmeleitung zum rechten Ende des Teils 80 hin, daß in den Halter 66 eingespannt ist. Dadurch wird die Erhitzung der Probe auf die Veraschungstemperatur erleichtert.

Die Verwendung eines »passiv beheizten« Probenträgers 54 gemäß Fig. 4 und 5 bringt den Vorteil, daß der Probenträger ohne Probleme gehaltert werden kann, und eine einfache Gestalt besitzt. Es können auch verhältnismäßig große Probenmengen eingebracht werden.

Da die Wärme zum Aufheizen der Probe bei der Veraschung in der Veraschungsstellung 76 von dem Graphitrohr 40 auf die Probe und den Probenträger 54 übertragen werden muß, ergeben sich relativ lange Analysenzeiten. Auch zur Atomisierung muß die Wärme von dem Graphitrohr 40 auf die Probe in der Atomisierungsstellung 78 übertragen werden. Die Aufheizgeschwindigkeit ist dabei nicht veränderbar. Das kann bei hochschmelzenden Elementen zu Problemen führen.

Aus diesem Grund ist bei dem Ausführungsbeispiel nach Fig. 3, Fig. 6 bis 8 ein »aktiver« Probenträger vorgesehen, der durch Hindurchleiten von elektrischem Strom beheizbar ist.

Der Grundaufbau ist in Fig. 3 der gleiche wie in Fig. 2, und entsprechende Teile sind mit den gleichen Bezugzeichen versehen wie dort.

Bei der Ausführungsform nach Fig. 3 ist der Schlitten 60 durch den Antriebsmotor 62 nur in drei Stellungen nämlich die Probenaufgabestellung, die zurückgefahrene Stellung und die Atomisierungsstellung verfahrbar. In der Probenaufgabestellung befindet sich der Probenträger 54A wieder unter dem Dosierfenster 68. In der zurückgefahrenen Stellung befindet sich der Probenträger 54A auf der dem Graphitrohr 40 abgewandten Seite des Dosierfensters 68. In der Atomisierungsstellung erstreckt sich der Probenträger 54A in das Graphitrohr 40 hinein.

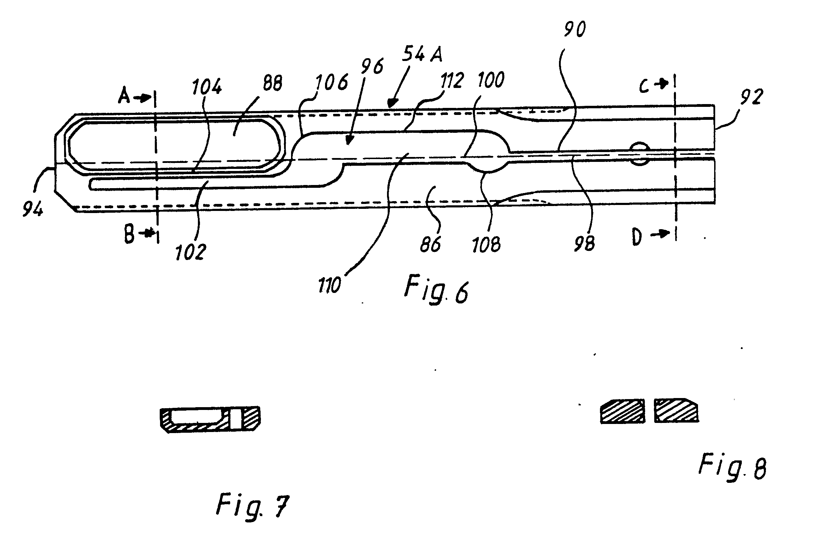

Der Probenträger 54A ist in den Fig. 6 bis 8 im einzelnen dargestellt.

Der Probenträger 54A ist ebenfalls von einem langgestreckten flachen Teil 86 von rechteckiger Grundform gebildet, an an einem Ende eine flache Vertiefung 88 aufweist. Die Vertiefung 88 ist seitlich versetzt in dem Teil 86 angeordnet. In dem Teil 86 ist ein Längsschlitz 90 gebildet, der von dem der Vertiefung 88 abgewandten ersten Ende 92 über fast die gesamte Länge des Teils 86 seitlich an der Vertiefung 88 vorbei bis kurz vor das zweite Ende 94 verläuft. Auch hier weist der Teil 86 in seinem mittleren Bereich in Längsrichtung gegen die Vertiefung 88 versetzt einen Durchbruch 96 auf. Der Schlitz 90 weist einen ersten geraden Abschnitt 98 auf, der von dem ersten Ende 92 im wesentlichen längs der Mittellinie 100 des Teils 86 verläuft. An den ersten geraden Abschnitt 98 schließt sich der langgestreckte, in Längsrichtung des Teils 86 angeordnete Durchbruch 96 an. Von dem Durchbruch 96 geht ein weiterer gerader Abschnitt 102 aus, der gegen die Mittellinie 100 seitlich versetzt ist und sich längs einer Seitenkante 104 der unsymmetrisch zur Mittellinie 100 angeordneten gestreckten Vertiefung 88 erstreckt. Der Durchbruch 96 enthält zwei im Abstand voneinander angeordnete, zur Mittellinie 100 symmetrische Bohrungen 106 und 108, die durch einen nach einer Seite (oben in Fig. 6) gegen die Mittellinie 100 versetzten, verbreiterten, dritten Schlitzabschnitt 110 verbunden sind, dessen eine Kante 112 tangential zu den Querschnitten beider Bohrungen 106 und 108 verläuft. Dabei endet der erste Abschnitt 98 des Schlitzes 90 in der einen Bohrung 108. Der zweite Abschnitt 102 des Schlitzes ist nach der anderen Seite (unten in Fig. 6) hin versetzt und verläuft tangential zu dem Querschnitt der anderen Bohrung 106.

Der Probenträger besitzt somit im wesentlichen U-Form. Es kann über die Schenkel ein elektrischer Strom durch den Probenträger geleitet werden, wobei sich dieser insbesondere im Bereich der Vertiefung 88 stark erwärmt. Es hat sich gezeigt, daß die beschriebene Form besonders günstig ist, sowohl hinsichtlich der örtlichen Erzeugung von Joulscher Wärme als auch hinsichtlich der Wärmeableitung zum Halter 66.

Bei der Ausführungsform nach Fig. 3 und Fig. 6 bis 8 wird der Probenträger 54A zunächst in die Probenaufgabestellung 72 unter das Dosierfenster 68 gefahren. In dieser Stellung wird die Probe auf den Probenträger 54A aufgebracht. Anschließend wird in der gleichen Stellung der Probenträger 54A durch Hindurchleiten von elektrischem Strom aufgeheizt, derart, daß die Probe (wenn erforderlich) getrocknet und verascht wird. Lösungsmitteldämpfe und Ruß werden von dem Schutzgasstrom 70 über das Dosierfenster 68 abgeführt. Dabei kann die Entfernung zwischen Probenträger 54A und Graphitrohr 40 relativ groß gewählt werden, da der Probenträger nicht zum Trocknen und Zersetzen vom Graphitrohr 40 beheizt zu werden braucht. Dementsprechend wird das Graphitrohr 40 weniger von Lösungsmitteldämpfen und Rauch beeinflußt.

Anschließend wird der Probenträger 54A durch den Schlitten 60 und den Antriebsmotor 62 in die zurückgefahrene Stellung 74 bewegt. In dieser Stellung ist der Probenträger 54A so weit von dem Graphitrohr 40 entfernt, daß er beim Aufheizen des Graphitrohrs 40 auf Atomisierungstemperatur nicht auf eine unerwünscht hohe Temperatur indirekt beheizt wird. Es können also keine interessierenden Probenbestandteile verdampfen und durch den Schutzgasstrom 70 vorzeitig abgeführt werden. Wenn das Graphitrohr 40 auf die Atomisierungstemperatur aufgeheizt ist, wird der Probenträger 54A in die Atomisierungsstellung 78 vorgefahren. Durch direktes Beheizen des Probenträgers 54A, nämlich indem Strom durch diesen hindurchgeleitet wird, kann der Probenträger 54A ebenfalls beheizt werden. Dadurch läßt sich die Aufheizgeschwindigkeit beeinflussen, was eine höhere Empfindlichkeit bei hochschmelzenden Elementen bringt.

Die beschriebene Anordnung gestattet weiterhin eine Verringerung der Analysenzeit. Es ist möglich, die Heizung an optimale Analysebedingungen anzupassen.

Diese Anordnung erfordert allerdings einen höheren apparativen Aufwand bei der Heizeinrichtung und einen größeren Bedienaufwand, da zwei Netzgeräte, eines für den Probenträger 54A und eines für das Graphitrohr 40 vorgesehen und eingestellt werden müssen.

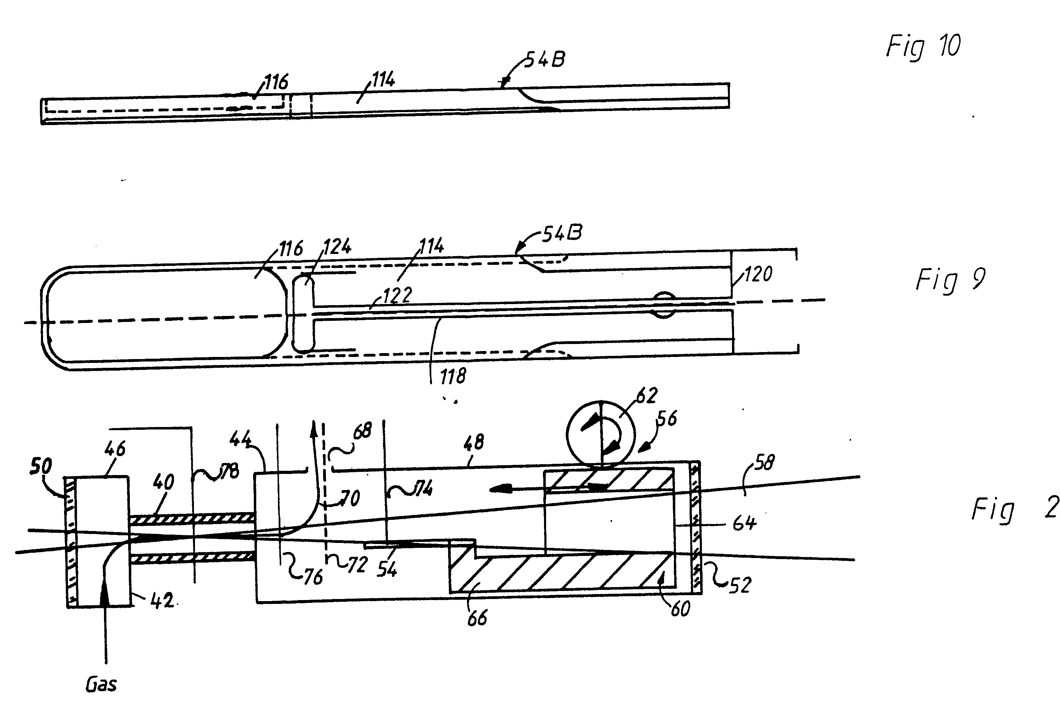

Fig. 9 und 10 zeigen eine andere Ausführungsform des Probenträgers 54B, die ebenfalls in Verbindung mit dem Gerät nach Fig. 3 verwendet werden kann. Auch dort besteht der Probenträger 54B aus einem flachen Teil 114 von rechteckiger Grundform, der an einem Ende eine flache Vertiefung 116 aufweist. Die Vertiefung 116 erstreckt sich hier im wesentlichen über die gesamte Breite des Teils 114, so daß eine relativ große Probenmenge aufgebracht werden kann. Auch hier ist in dem Teil ein Längsschlitz 118 gebildet, der von dem der Vertiefung 116 abgewandten ersten Ende 120 des Teils 114 ausgeht. Der Längsschlitz 118 verläuft von dem Ende 120 längs der Mittellinie 122 des Teils bis kurz vor die Vertiefung 116. Dort steht der Längsschlitz 118 mit einem sich fast über die gesamte Breite des Teils 114 erstreckenden, an den Enden geschlossenen Querschnitt 124 in Verbindung.

Die Arbeitsweise mit dem Probenhalter 54B ist die gleiche, wie sie oben in Verbindung mit dem Probenhalter 54A beschrieben wurde.

Als Material für die Probenhalter hat sich Glaskohle als vorteilhaft erwiesen (Analytica, Chimica, Acta, 119 (1980) 1—24).

## Patentansprüche

1. Verfahren für die flammenlose Atomabsorptions-Spektroskopie zum Einbringen einer Probe in ein Graphitrohr (10, 40), das mit seinen Enden zwischen Kontaktstücken gehalten ist, die je einen mit der Längsbohrung des Graphitrohres fluchtenden Durchbruch (18, 46, 48) für den Durchtritt eines Meßlichtbündels (20, 58) aufweisen, bei welchem

(a) die Probe auf einen Probenträger (26, 54, 54A, 54B) aufgebracht wird,
(b) der Probenträger (26, 54, 54A, 54B) in eine erste Stellung außerhalb des Graphitrohrs (10, 40) bewegt und die Probe dort zur Veraschung erhitzt wird und
(c) der Probenträger (26, 54, 54A, 54B) in eine zweite Stellung innerhalb des Graphitrohrs (10, 40) bewegt und die Probe dort zur Atomisierung erhitzt wird, wobei die Probe auf dem Probenträger (26, 54, 54A, 54B) verbleibt,

dadurch gekennzeichnet, daß

(d) die Probe auf einen plättchen- oder tiegelförmigen Probenträger (26, 54, 54A, 54B) aufgebracht wird und
(e) der Probenträger (26, 54, 54A, 54B) unterhalb des Meßlichtbündels (20, 58) in Axialrichtung von der Stirnseite her in das Graphitrohr (10, 40) in seine zweite Stellung bewegt wird.

2. Verfahren nach Anspruch 1, dadurch gekennzeichnet, daß auf den Probenträger (26, 54, 54A, 54B) eine Probe in festem Zustand aufgebracht wird.

3. Verfahren nach Anspruch 1 oder 2, dadurch gekennzeichnet, daß die Probe für die Veraschung in der ersten Stellung durch eine von dem Graphitrohr (10) getrennte Heizeinrichtung (30) beheizt wird.

4. Verfahren nach Anspruch 3, dadurch gekennzeichnet, daß der Probenträger (54A, 54B) durch Hindurchleiten von elektrischem Strom beheizt wird.

5. Vorrichtung zur Durchführung des Verfahrens nach Anspruch 1 in einem Atomabsorptions-Spektrometer, welches ein Graphitrohr (10, 40) aufweist, das mit seinen Enden zwischen Kontaktstücken gehalten ist, die je einen mit der Längsbohrung des Graphitrohres fluchtenden Durchbruch (18, 46, 48) für den Durchtritt eines Meßlichtbündels (20, 58) aufweisen, enthaltend

(a) einen Probenträger (26, 54, 54A, 54B), auf den die Probe aufgebracht wird und
(b) eine Vorrichtung (22, 28; 56) zum Bewegen des Probenträgers
    (b₁) in eine erste Stellung außerhalb des Graphitrohres (10, 40), in welcher eine Veraschung der Probe stattfindet, und
    (b₂) in eine zweite Stellung innerhalb des Graphitrohrs (10, 40), in welcher eine Atomisierung der Probe erfolgt, wobei die Probe auf dem Probenträger (26, 54, 54A, 54B) verbleibt,

dadurch gekennzeichnet, daß

(c) der Probenträger (26, 54, 54A, 54B) plättchen- oder tiegelförmig ausgebildet ist, und
(d) die Vorrichtung (22, 28; 56) zum Bewegen des Probenträgers (26, 54, 54A, 54B)
    (d₁) vor einer Stirnfläche des Graphitrohrs (10, 40) außerhalb des Strahlengangs des Meßlichtbündels (20, 58) angeordnet und
    (d₂) der Probenträger (26, 54, 54A, 54B) unterhalb des Meßlichtbündels (20, 58) in Axialrichtung von der Stirnseite her in das Graphitrohr (10, 40) in seine zweite Stellung bewegbar ist.

6. Vorrichtung nach Anspruch 5, dadurch gekennzeichnet, daß die Vorrichtung zum Bewegen des Probenträgers

(a) einen in Längsrichtung des Graphitrohres (10, 40) geradgeführten Schlitten (22, 60) aufweist, an welchem der Probenträger (26, 54, 54A, 54B) graphitrohrseitig, sich in Längsrichtung des Graphitrohres (10, 40) erstreckend angebracht ist, und
(b) einen Antriebsmotor (28, 62), der mit dem Schlitten (22, 60) gekuppelt ist und durch den der Schlitten (22, 60) mit dem Probenträger (26, 54, 54A, 54B) in Richtung auf die Stirnfläche des Graphitrohres (10, 40) kontrolliert vorbewegbar ist.

7. Vorrichtung nach Anspruch 6, dadurch gekennzeichnet, daß

(a) die Kontaktstücke von kühlmitteldurchflossenen Kühlkammern (12; 42, 44) gebildet sind,
(b) der Schlitten (22, 60) mit dem Probenträger (26, 54, 54A, 54B) in dem Durchbruch der einen Kühlkammer (12, 44) angeordnet ist.

8. Vorrichtung nach Anspruch 7, dadurch gekennzeichnet, daß

(a) der Schlitten (60) ringförmig mit einem Durchbruch (64) für das Meßlichtbündel (58) ausgebildet ist und
(b) graphitrohrseitig unterhalb des Meßlichtbündels (58) einen axial vorstehenden Halter (66) bildet, an welchem der Probenträger (54, 54A, 54B) sitzt.

9. Vorrichtung nach Anspruch 8, dadurch gekennzeichnet, daß

(a) die Kühlkammer (44) an ihrem graphitrohrseitigen Ende ein seitliches Dosierfenster (68) zum Einbringen der Probe aufweist und
(b) der Schlitten (60) durch den Antriebsmotor (62)
    (b₁) in eine Probenaufgabestellung (70) verfahrbar ist, in welcher sich der Probenträger (54, 54A, 54B) unter diesem Dosierfenster (68) befindet,
    (b₂) in eine zurückgefahrene Stellung (74), in welcher sich der Probenträger (54, 54A, 54B) auf der dem Graphitrohr (40) abgewandten Seite des Dosierfensters (68) befindet und
(c) in eine Atomisierungsstellung (78), in welcher sich der Probenträger (54, 54A, 54B) in das Graphitrohr (40) erstreckt.

10. Vorrichtung nach Anspruch 9, dadurch gekennzeichnet, daß ein Schutzgasstrom (70) durch das Graphitrohr (40) hindurch in den Durchbruch (48) der Kühlkammer (44) und durch das seitliche Dosierfenster (68) hinausströmt.

11. Vorrichtung nach Anspruch 10, dadurch gekennzeichnet, daß der Schlitten (60) durch den Antriebsmotor (62) zwischen dem Anfahren der Probenaufgabestellung (72) und dem Anfahren der zurückgezogenen Stellung (74) in eine Veraschungsstellung (76) verfahrbar ist, in welcher sich der Probenträger (54) zwischen dem Dosierfenster (68) und der Stirnfläche des Graphitrohrs (40) befindet.

12. Vorrichtung nach einem der Ansprüche 5 bis 11, dadurch gekennzeichnet, daß der Probenträger (54A, 54B) durch Hindurchleiten von elektrischem Strom beheizbar ist.

13. Vorrichtung nach einem der Ansprüche 5 bis 11, dadurch gekennzeichnet, daß der Probenträger (26) kontaktlos beheizbar ist.

14. Vorrichtung nach Anspruch 13, dadurch gekennzeichnet, daß zur kontaktlosen Beheizung eine Lichtquelle (32) und ein optisches Glied (34) vorgesehen ist, das die Strahlung der Lichtquelle (32) auf den Probenträger (26) konzentriert.

15. Vorrichtung nach einem der Ansprüche 5 bis 11, dadurch gekennzeichnet, daß der Probenträger (54, 54A, 54B) von einem langgestreckten, flachen Teil (80, 86, 114) von rechteckiger Grundform gebildet ist, der an einem Ende eine flache Vertiefung (82, 88, 116) aufweist.

16. Vorrichtung nach Anspruch 15, dadurch gekennzeichnet, daß

(a) die Vertiefung (88) seitlich versetzt in dem Teil (86) angeordnet ist und

(b) in dem Teil (86) ein Längsschlitz (90) gebildet ist, der von dem der Vertiefung (88) abgewandten ersten Ende (92) über fast die gesamte Länge des Teils (86) seitlich an der Vertiefung (88) vorbei bis kurz vor das zweite Ende (94) verläuft.

17. Vorrichtung nach Anspruch 15 oder 16, dadurch gekennzeichnet, daß der Teil (86) in seinem mittleren Bereich in Längsrichtung gegen die Vertiefung (88) versetzt einen Durchbruch (96) aufweist.

18. Vorrichtung nach den Ansprüchen 16 und 17, dadurch gekennzeichnet, daß

(a) der Schlitz einen ersten geraden Abschnitt (98) aufweist, der von dem ersten Ende (92) im wesentlichen längs der Mittellinie des Teils (86) verläuft,

(b) an den ersten geraden Abschnitt (98) sich ein langgestreckter, in Längsrichtung des Teils (86) angeordneter Durchbruch (96) anschließt und

(c) von dem Durchbruch (96) ein zweiter gerader Abschnitt (102) ausgeht, der gegen die Mittellinie seitlich versetzt ist, sich längs einer Seitenkante (104) der unsymmetrisch zur Mittellinie angeordneten, langgestreckten Vertiefung (88) erstreckt.

19. Vorrichtung nach Anspruch 18, dadurch gekennzeichnet, daß

(a) der Durchbruch (96) zwei im Abstand voneinander angeordnete, zur Mittellinie symmetrische Bohrungen (106, 108) enthält, die durch einen nach einer Seite gegen die Mittellinie versetzten, verbreiterten dritten Schlitzabschnitt (110) verbunden sind, dessen eine Kante (112) tangential zu den Querschnitten beider Bohrungen (106, 108) verläuft, wobei der erste Abschnitt (98) des Schlitzes (90) in der einen Bohrung (108) endet,

(b) der zweite Abschnitt (102) des Schlitzes (90) nach der anderen Seite hin versetzt ist und tangential zu dem Querschnitt der anderen Bohrung (106) verläuft.

20. Vorrichtung nach Anspruch 15, dadurch gekennzeichnet, daß in dem Teil (114) ein längs dessen Mittellinie (122) verlaufender Längsschlitz (118) gebildet ist, der von dem der Vertiefung (116) abgewandten Ende (120) bis kurz vor die Vertiefung (116) verläuft und dort mit einem sich fast über die gesamte Breite des Teils (114) erstreckenden, an den Enden geschlossenen Querschlitz (124) in Verbindung steht.

**Claims**

1. Method for the flameless atomic absorption spectroscopy for introducing a sample into a graphite tube (10, 40), which is held with its ends between contact pieces which each have an aperture (18, 46, 48) aligned with the longitudinal bore of the graphite tube for permitting a measuring light beam (20, 58) to pass through, in which

(a) the sample is applied to a sample carrier (26, 54, 54A, 54B),

(b) the sample carrier (26, 54, 54A, 54B) is moved into a first position outside the graphite tube (10, 40) where the sample is heated to ashing, and

(c) the sample carrier (26, 54, 54A, 54B) is moved into a second position inside the graphite tube (10, 40) where the sample is heated to atomization, the sample remaining on the sample carrier (26, 54, 54A, 54B),

characterized in that

(d) the sample is applied to a lamella or crucible-shaped sample carrier (26, 54, 54A, 54B), and

(e) the sample carrier (26, 54, 54A, 54B) is moved from the front end in axial direction below the measuring light beam (20, 58) into the graphite tube (10, 40) to its second position.

2. Method as set forth in claim 1, characterized in that a sample in solid state is applied to the sample carrier (26, 54, 54A, 54B).

3. Method as set forth in claim 1 or 2, characterized in that the sample is heated for the ashing in the first position by a heating device (30) separate from the graphite tube (10).

4. Method as set forth in claim 3, characterized in that the sample carrier (54A, 54B) is heated by passing electrical current therethrough.

5. Device for carrying out the method of claim 1 in an atomic absorption spectrometer having a graphite tube (10, 40), which is held with its ends between contact pieces which each have an aperture (18, 46, 48) aligned with the longitudinal bore of the graphite tube for permitting a measuring light beam (20, 58) to pass through, comprising

(a) a sample carrier (26, 54, 54A, 54B), to which the sample is applied, and

(b) a device (22, 28; 56) for moving the sample carrier

(b₁) into a first position outside the graphite tube (10, 40) where the sample is ashed, and

(b₂) into a second position inside the graphite tube (10, 40), where the sample is atomized, the sample remaining on the sample carrier (26, 54, 54A, 54B),

characterized in that

(c)  the sample carrier (26, 54, 54A, 54B) is lamella- or crucible-shaped and
(d)  the device (22, 28; 54) for moving the sample carrier (26, 54, 54A, 54B)
     (d₁) is arranged in front of an end face of the graphite tube (10, 40) outside the path of rays of the measuring light beam (20, 58) and
     (d₂) the sample carrier (26, 54, 54A, 54B) is movable from the end face in axial direction below the measuring ligth beam (20, 58) into the graphite tube (10, 40) to its second position.

6.  Device as set forth in claim 5, characterized in that the device for moving the sample carrier has

(a)  a carriage (22, 60) guided straight in longitudinal direction of the graphite tube (10, 40), to which the sample carrier (26, 54, 54A, 54B) is attached on the graphite tube side, which sample carrier (26, 54, 54A, 54B) extends in longitudinal direction of the graphite tube (10, 40), and
(b)  a driving motor (28, 62) which is connected to the carriage (22, 60) and which is adapted to advance the carriage (22, 60) with the sample carrier (26, 54, 54A, 54B) toward the end face of the graphite tube (10, 40).

7.  Device as set forth in claim 6, characterized in that

(a)  the contact pieces are formed by cooling chambers (12; 42, 44) flown through by coolant,
(b)  the carriage (22, 60) with the sample carrier (26, 54, 54A, 54B) is arranged in the aperture of one cooling chamber (12, 44).

8.  Device as set forth in claim 7, characterized in that

(a)  the carriage (60) is annular with an aperture (64) for the measuring light beam (58) and
(b)  forms a support (66) extending axially below the measuring light beam (58), on which support the sample carrier (54, 54A, 54B) is mounted.

9.  Device as set forth in claim 8, characterized in that

(a)  the cooling chamber (44) has a lateral dosing ape ture (68) at its end on the graphite tube side for intcoducing the sample, and
(b)  the carriage (60) is movable by the driving motor (62),
     (b₁) into a sample fedding position (70), in which the sample carrier (54, 54A, 54B) is located below this dosing aperture (68),
     (b₂) into a retracted position (74), in which the sample carrier (54, 54A, 54B) is located on the side of the dosing aperture (68) remote from the graphite tube (40), and
     (c)  into an atomization position (78), in which the sample carrier (54, 54A, 54B) extends into the graphite tube (40).

10. Device as set forth in claim 9, characterized in that an inert gas flow (70) passes through the graphite tube (40) into the aperture (48) of the cooling chamber (44) and emerges through the lateral dosing aperture (68).

11. Device as set forth in claim 10, characterized in that the carriage (60) is movable by the driving motor (62) into an ashing position (76) between its movement to the sample feeding position (72) and its movement to the retracted position (74), in which ashing position the sample carrier (54) is located between the dosing aperture (68) and the end face of the graphite tube (40).

12. Device as set forth in anyone of the claims 5 to 11, characterized in that the sample carrier (54A, 54B) is heatable by passing electrical current therethrough.

13. Device as set forth in anyone of the claims 5 to 11, characterized in that the sample carrier (26) is heatable in contact-free manner.

14. Device as set forth in claim 13, characterized in that a light source (32) and an optical member (34) are provided for the contact-free heating, which optical member (34) concentrates the radiation of the light source (32) on the sample carrier (26).

15. Device as set forth in anyone of the claims 5 to 11, characterized in that the sample carrier (54, 54A, 54B) is formed by an elongated flat part (80, 86, 114) of generally rectangular shape, which has a shallow recess (82, 88, 116) at its end.

16. Device as set forth in claim 15, characterized in that

(a)  the recess (88) is arranged laterally offset in the part (86), and
(b)  a longitudinal slot (90) is formed in the part (86) and extends laterally past the recess (88) from the first end (92) remote from the recess (88) through nearly the entire length of the part (86) to short of the second end (94).

17. Device as set forth in claim 15 or 16, characterized in that the part (86), in its central area, has an aperture (96) longitudinally offset relative to the recess (88).

18. Device as set forth in claims 16 and 17, characterized in that

(a)  the slot has a first straight section (98), which extends substantially along the center line from the first end (92),
(b)  the first straight section (98) is connected to an elongated aperture (96) extending in the longitudinal direction of the part (86), and

(c) a second straight section (102) proceeds from the aperture (96), which section (102) is laterally offset relative to the center line and extends along a lateral edge (104) of the elongated recess (88) arranged unsymmetrically to the center line.

19. Device as set forth in claim 18, characterized in that

(a) the aperture (96) comprises two spaced bores (106, 108) symmetrical to the center line, which bores (106, 108) are interconnected through an enlarged third slot section (110) offset to one side relative to the center line, one edge (112) of which section (110) extends tangential to the cross sections of both bores (106, 108), the first section (98) of the slot (90) ending in one bore (108),

(b) the second section (102) of the slot (90) is offset to the other side and extends tangentially to the cross section of the other bore (106).

20. Device as set forth in claim 15, characterized in that a longitudinal slot (118) is formed in the part (114), which extends along the center line (122) of this part (114) from the end (120) remote from the recess (116) to short of the recess (116), and communicates there with a transverse slot (124) which has closed ends and extends over nearly the entire breadth of the part (114).

## Revendications

1. Méthode pour la spectroscopie par absorption atomique sans flamme pour introduire un échantillon dans un tube de graphite (10, 40) qui, avec ses extrémités est tenu entre des pièces de contact présentant chancune un percement (18, 46, 48) aligné sur l'alésage longitudinal du tube de graphite pour le passage d'un faisceau lumineux de mesure (20, 58), dans laquelle

(a) l'échantillon est appliqué à un porteur d'échantillon (26, 54, 54A, 54B),

(b) le porteur d'échantillon (26, 54, 54A, 54B) est déplacé dans une première position à l'extérieur du tube de graphite (10, 40) et l'échantillon y est chauffé jusqu'à incinération, et

(c) le porteur d'échantillon (26, 54, 54A, 54B) est déplacé dans une deuxième position à l'intérieur du tube de graphite (10, 40) et l'échantillon y est chauffé jusqu'à atomisation, l'échantillon restant sur le porteur d'échantillon (26, 54, 54A, 54B),

caractérisé par le fait que

(d) l'échantillon est posé sur un porteur d'échantillon (26, 54, 54A, 54B) en forme de plaquette ou de creuset, et

(e) le porteur d'échantillon (26, 54, 54A, 54B) est déplacé du front par dessous le faisceau lumineux de mesure (20, 58), en direction axiale, jusque dans le tube de graphite (10, 40) pour arriver dans sa deuxième position.

2. Méthode selon la revendication 1, caractérisé par le fait qu'un échantillon en état solide est posé sur le porteur d'échantillon (26, 54, 54A, 54B).

3. Méthode selon les revendications 1 ou 2, caractérisé par le fait que l'échantillon, pour l'incinération dans la première position, est chauffé par une installation de chauffage (30) séparée du tube de graphite (10).

4. Méthode selon la revendication 3, caractérisé par le fait que le porteur d'échantillon (54, 54A, 54B) est chauffé par un courant électrique conduit à travers celui-là.

5. Dispositif pour réaliser la méthode selon la revendication 1, dans un spectromètre d'absorption atomique présentant un tube de graphite (10, 40) qui, avec ses extrémités est tenu entre des pièces de contact présentant chacune un percement (18, 46, 48) aligné sur l'alésage longitudinal du tube de graphite pour le passage d'un faisceau lumineux de mesure (20, 58) contenant

(a) un porteur d'échantillon (26, 54, 54A, 54B) sur lequel l'échantillon est posé, et

(b) un dispositif (22, 28; 56) pour déplacer le porteur d'échantillon
  (b₁) dans une première position à l'extérieur du tube de graphite (10, 40), dans laquelle il se produit une incinération de l'échantillon, et
  (b₂) dans une deuxième position à l'intérieur du tube de graphite (10, 40), dans laquelle à lieu une atomisation de l'échantillon, l'échantillon restant sur le porteur d'échantillon (26, 54, 54A, 54B),

caractérisé par le fait que

(c) le porteur d'échantillon (26, 54, 54A, 54B) est en forme de plaquette ou de creuset, et

(d) le dispositif (22, 28; 56) pour déplacer le porteur d'échantillon (26, 54, 54A, 54B)
  (d₁) est disposé devant un front du tube de graphite (10, 40) en dehors de la marche des rayons du faisceau lumineux de mesure (20, 58), et
  (d₂) le porteur d'échantillon (26, 54, 54A, 54B) peut être déplacé du front, par dessous le faisceau lumineux de mesure (20, 58), en direction axiale, jusque dans le tube de graphite (10, 40) pour arriver dans sa deuxième position.

6. Dispositif selon la revendication 5, caractérisé par le fait que le dispositif pour déplacer le porteur d'échantillon présente

(a) un chariot (22, 60) guidé en ligne droite en direction longitudinale du tube de graphite (10, 40), sur lequel le porteur d'échantillon (26, 54, 54A, 54B) est monté du côte du tube de graphite, le porteur d'échantillon (26, 54, 54A, 54B) s'étendant en direction longitudinale du tube de graphite (10, 40), et

(b) un moteur de commande (28, 62) qui est couplé avec le chariot (22, 60) et qui peut faire avancer de manière controlée le chariot (22, 60) avec le porteur d'échantillon (26, 54, 54A, 54B) vers le front du tube de graphite (10, 40).

7. Dispositif selon la revendication 6, caractérisé par le fait que

(a) les pièces de contact sont formées par des chambres frigorifiques (12; 42, 44) traversées par un agent refroidisseur,

(b) le chariot (22, 60) avec le porteur d'échantillon (26, 54, 54A, 54B) est disposé dans le percement d'une chambre frigorifique (12, 44).

8. Dispositif selon la revendication 7, caractérisé par le fait que

(a) le chariot (60) est formé de manière annulaire avec un percement (64) pour le faisceau lumineux de mesure (58), et

(b) forme, du côté du tube de graphite au-dessous du faisceau lumineux de mesure (58), un support (66) faisant saillie axialement, sur lequel le porteur d'échantillon (54, 54A, 54B) est monté.

9. Dispositif selon la revendication 8, caractérisé par le fait que

(a) la chambre frigorifique (44) présente, à son extrémité du côté du tube de graphite, un percement de dosage (68) latéral pour introduire l'échantillon, et

(b) le chariot (60), grâce au moteur de commande (62), peut être déplacé
  (b₁) dans une position d'alimentation d'échantillon (72), dans laquelle le porteur d'échantillon (54, 54A, 54B) se trouve au-dessous de ce percement de dosage (68),
  (b₂) dans une position reculée (74), dans laquelle le porteur d'échantillon (54, 54A, 54B) se trouve du côte du percement de dosage (68) opposé au tube de graphite (40), et

(c) dans une position d'atomisation (78), dans laquelle le porteur d'échantillon (54, 54A, 54B) s'étend dans le tube de graphite (40).

10. Dispositif selon la revendication 9, caractérisé par le fait qu'un courant de gaz inerte (70) coule à travers le tube de graphite (40), dans le percement (48) de la chambre frigorifique (44) et sort par le percement de dosage (68) latéral.

11. Dispositif selon la revendication 10, caractérisé par le fait que le chariot (60), grâce au moteur de commande (62), peut être déplacé, entre le déplacement vers la position d'alimentation d'échantillon (72) et le déplacement vers la position reculée (74), dans une position d'incinération (76), dans laquelle le porteur d'échantillon (54) se trouve entre le percement de dosage (68) et le front du tube de graphite (40).

12. Dispositif selon l'une quelconque des revendications 5 à 11, caractérisé par le fait que le porteur d'échantillon (54A, 54B) peut être chauffé par un courant électrique conduit à travers celui-là.

13. Dispositif selon l'une quelconque des revendications 5 à 11, caractérisé par le fait que le porteur d'échantillon (26) peut être chauffé sans contact.

14. Dispositif selon la revendication 13, caractérisé par le fait que pour le chauffage sans contact sont prévus une source lumineuse (32) et un élément optique (34) qui concentre le rayonnement de la source lumineuse (32) sur le porteur d'échantillon (26).

15. Dispositif selon l'une quelconque des revendications 5 à 11, caractérisé par le fait que le porteur d'échantillon (54, 54A, 54B) est formé d'une partie (80, 86, 114) allongée, aplatie, de forme fondamentale rectangulaire, qui présente un creux (82, 88, 116) peu profond à son extrémité.

16. Dispositif selon la revendication 15, caractérisé par le fait que

(a) le creux (88) est arrangé de manière décalée latéralement dans la partie (86), et

(b) dans la partie (86) est formée une fente longitudinale (90) qui s'étend de première extrémité (92) opposée du creux (88), sur presque toute la longeur de la partie (86), latéralement le long du creux (88) jusqu'à peu avant la deuxième extrémité (94).

17. Dispositif selon les revendications 15 ou 16, caractérisé par le fait que la partie (86) présente dans sa région moyenne un percement (96) décalé longitudinalement par rapport au percement (88).

18. Dispositif selon les revendications 16 et 17, caractérisé par le fait

(a) que la fente présente une première section droite (98), qui s'étend à partir de la première extrémité (92) essentiellement le long de la ligne médiane de la partie (86),

(b) qu'à la première section droite (98) fait suite un percement (96) allongé, disposé dans la direction longitudinale de la partie (86), et

(c) que du percement (96) par une deuxième section droite (102), qui est dècalée latéralement par rapport à la ligne médiane et qui s'étend le long d'un bord latéral (104) du percement (88) allongé, disposé asymétriquement par rapport à la ligne médiane.

19. Dispositif selon la revendication 18, caractérisé par le fait que

(a) le percement (96) comporte deux alésages (106, 108) écartés symétriquement par rapport à la ligne médiane et qui communiquent par une troisième section (110) de la fente qui est élargie et écartée d'un côté par rapport à la ligne médiane, dont un bord (112) est tangentiel aux sections transversales de deux alésages (106, 108) la première section (98) de la fente (90) aboutissant à l'un des alésages (108),

(b) la deuxième section (102) de la fente (90) est écartée de l'autre côté et est tangentielle à la section transversale de l'autre alésage 106.

20. Dispositif selon la revendication 15, caractérisé par le fait que dans la partie (114) est formé une fente longitudinale (118) s'étendant le long de la ligne médiane (122) de celle-ci, qui s'étend de l'extrémité (120) opposée au creux (116) jusque peu avant le creux (116) et, ici, communique avec une fente transversale (124) qui s'étend sur presque toute la largeur de la partie (114) et qui est fermée aux extrémités.

Fig. 1

0 053 349

Fig. 3

Gas

Fig 5

Fig 4

17

Fig. 6

Fig. 7

Fig. 8

0 053 349

Fig 10

Fig 9

Fig 2

0 053 349